# EUROPÄISCHE PATENTANMELDUNG

(11) **EP 3 193 119 A1**
(43) Veröffentlichungstag der Anmeldung: **19.07.2017**
(21) Anmeldenummer: 16205753.3
(22) Anmeldetag: 21.12.2016
(51) Int. Cl.: F28D 21/00, F28F 9/02, F28D 7/16

(54) **ABGASWÄRMEÜBERTRAGER**

(30) Priorität: 15.01.2016 DE 102016200456
(71) Anmelder: Mahle International GmbH, 70376 Stuttgart (DE)
(72) Erfinder: Emrich, Karsten, 70599 Stuttgart (DE); Havaldar, Vahid, 70180 Stuttgart (DE); Krämer, Bernd, 71701 Schwieberdingen (DE); Schmidgall, Gaelle, 70378 Stuttgart (DE)
(74) Vertreter: BRP Renaud & Partner mbB Rechtsanwälte Patentanwälte Steuerberater

(57) **Zusammenfassung**

Die Erfindung betrifft einen Abgaswärmeübertrager (1) mit einem Gehäuse (3) und einem darin angeordneten Wärmeübertragerblock (4), der ein Rohrbündel mit mehreren Flachrohren (5) aufweist, die längsendseitig in komplementär dazu ausgebildeten Durchzügen (6) in Rohrböden (7,8) gehalten sind, wobei in den Flachrohren (5) ein erster Strömungspfad für Abgas und um die Flachrohre (5) herum und innerhalb des Gehäuses (3) ein zweiter Strömungspfad für Kühlmittel verläuft.

Erfindungswesentlich ist dabei, dass an dem Gehäuse (3) Rastkonturen (9) vorgesehen sind, die mit an einem zugehörigen Rohrboden (7,8) angeordneten Gegenrastkonturen (10) zusammenwirken und die beiden Rohrböden (7,8) und damit den Wärmeübertragerblock (4) am Gehäuse fixieren.

## Beschreibung

Die vorliegende Erfindung betrifft einen Abgaswärmeübertrager mit einem Gehäuse und einem darin angeordneten Wärmeübertragerblock gemäß dem Oberbegriff des Anspruchs 1. Die Erfindung betrifft außerdem ein Verfahren zur Herstellung eines solchen Wärmeübertragers.

Gattungsgemäße Abgaswärmeübertrager sind hinlänglich bekannt und werden üblicherweise zur dichten Verbindung in einem Lötofen gelötet und/oder in einem Schweißprozess geschweißt. Um die einzelnen, miteinander zu verlötenden bzw. zu verschweißenden Bauteile während des Lötprozesses bzw. des Schweißprozesses relativ zueinander fixieren zu können, werden üblicherweise so genannte Lötrahmen bzw. Lötgestelle oder entsprechende Schweißgestelle bzw. Schweißrahmen verwendet.

Aus der DE 10 2008 019 320 A1 ist ein Abgaswärmeübertrager mit einem Wärmeübertragerblock mit einer ersten axialen Abschlusseinrichtung und mit einer zweiten axialen Abschlusseinrichtung bekannt, bei welchen der Wärmeübertragerblock sowohl axiale Eintrittsöffnungen als auch axiale Austrittsöffnungen aufweist und bei welchem an dem Wärmeübertragerblock Mittel zum Bilden eines Formschlusses mit der axialen Abschlusseinrichtung angeordnet sind. Die Mittel zum Bilden des Formschlusses stehen dabei zumindest teilweise axial über die axialen Eintrittsöffnungen und/oder über die axialen Austrittsöffnungen des Wärmeübertragerblocks derart hervor, dass sie radial neben Anlageschultern der axialen Abschlusseinrichtungen anordenbar sind, wodurch ein besonders radial druckfester Wärmeübertrager bereit gestellt werden kann.

Aus der WO 2012/019912 A1 ist ein Verfahren zur Herstellung eines Abgaswärmeübertragers für ein Kraftfahrzeug bekannt, bei welchem in ein vorgefertigtes Gehäuse ein Abgas des Kraftfahrzeugs aufnehmendes Rohrbündel befestigt und anschließend mit dem Gehäuse verlötet wird. Um dabei auf ein teures Lötgestell verzichten zu können, wird das Gehäuse durch eine flächig angreifende Kraft elastisch verformt, wobei das Rohrbündel während des Angreifens der Kraft in das Gehäuse eingeführt und nach dem Positionieren des Rohrbündels im Gehäuse dieses von der Kraft entlastet wird, wodurch das Rohrbündel im Inneren des Gehäuses verspannt wird.

Wie bereits zuvor erwähnt, werden bislang zum Löten/Schweißen eines Abgaswärmeübertragers so genannte Lötgestelle/Lötrahmen bzw. Schweißgestelle/Schweißrahmen verwendet, welche jedoch einen nicht unerheblichen Montage- und Reinigungsaufwand erfordern. Darüber hinaus verlängert sich durch die Montage auch die Taktzeit, wodurch die Herstellungskosten eines derartigen Abgaswärmeübertragers gesteigert werden.

Die vorliegende Erfindung beschäftigt sich daher mit dem Problem, für einen Abgaswärmeübertrager der gattungsgemäßen Art eine verbesserte oder zumindest eine alternative Ausführungsform anzugeben, die sich insbesondere durch eine vereinfachte und zudem qualitativ hochwertige Herstellung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einzelne Bauteile eines Abgaswärmeübertragers über selbstfixierende Verbindungsmittel, nämlich Rastmittel, aneinander zu fixieren und dadurch diese einzelne Bauteile während eines nachfolgenden Schweiß- und/oder Lötprozesses nicht aufwendig in einem Schweißrahmen/Lötrahmen halten zu müssen. Der erfindungsgemäße Abgaswärmeübertrager weist dabei ein Gehäuse sowie einen darin angeordneten Wärmeübertragerblock auf, der ein Rohrbündel mit mehreren Flachrohren umfasst, wobei die Flachrohre längsendseitig in komplementär dazu ausgebildeten Durchzügen in Rohrböden gehalten sind. In den Flachrohren verläuft dabei ein erster Strömungspfad für Abgas, während um die Flachrohre herum und innerhalb des Gehäuses ein zweiter Strömungspfad für Kühlmittel verläuft. Erfindungsgemäß sind nun an dem Gehäuse Rastkonturen vorgesehen, die mit an einem zugehörigen Rohrboden angeordneten Gegenrastkonturen zusammenwirken und die beiden Rohrböden und damit den Wärmeübertragerblock am Gehäuse fixieren. Durch die Rastkonturen und die zugehörigen Gegenrastkonturen kann somit eine Vorfertigung und auch eine Fixierung der Rohrböden und darüber auch der Flachrohre am Gehäuse des Abgaswärmeübertragers erreicht werden, wodurch ein derart vorfixierter Abgaswärmeübertrager ohne bislang erforderliche Lötgestelle bzw. Schweißrahmen einem nachfolgenden Dichtprozess, bspw. einem Verlöten oder einem Verschweißen zugeführt werden kann. Mit diesen Rastkonturen und den zugehörigen Gegenrastkonturen reduziert sich zudem auch ein Montageaufwand, da insbesondere das aufwendige Anbringen der bislang erforderlichen Lötrahmen/Schweißrahmen nunmehr entfällt. Derartige Verrastungen gewährleisten zudem eine zuverlässige Halterung der einzelnen Bauteile aneinander während des nachfolgenden Verbindungsprozesses und können darüber hinaus automatisiert geschlossen werden, so dass bspw. das Verrasten der Rohrböden mit dem Gehäuse automatisiert und damit kostengünstig in einer zugehörigen Maschine erfolgen kann. Durch die Verrastung der Rohrböden mit dem zugehörigen Gehäuse lässt sich auch das Phänomen der Schweißverziehungen in den Griff kriegen, welches mit bisherigen Schweißrahmen nur schwer handzuhaben war.

Bei einer vorteilhaften Weiterbildung der erfindungsgemäßen Lösung sind die Rastkonturen als Rastnasen ausgebildet. Derartige Rastnasen bzw. Rasthaken bilden eine besonders einfache Ausführungsform der Rastkonturen und ermöglichen ein Verrasten mit ebenfalls äußerst einfach gestalteten Gegenrastkonturen, wobei derartige Gegenrastkonturen bspw. durch einen Außenrand am Rohrboden gebildet werden können. Dabei ist klar, dass die Gegenrastkonturen keine Rillen, Vertiefungen oder derartiges sein müssen, sondern auch durch einen einfachen planen Bereich des Rohrbodens, beispielsweise einen planen Randbereich, gebildet sein können. Alternativ können derartige Gegenrastkonturen auch als Ausnehmung oder Durchgangsöffnung ausgebildet sein, wobei in diesem Fall ein Verrasten der Rastkontur bzw. der Rastnase mit dem Rand der Durchgangsöffnung erfolgt.

Bei einer weiteren vorteilhaften Ausführungsform der erfindungsgemäßen Lösung sind das Gehäuse und die Rohrböden aus Metall, bspw. aus Aluminium, ausgebildet. Aluminium bietet dabei den großen Vorteil, dass es zum einen leicht ist, was insbesondere für die Anwendung eines solchen Abgaswärmeübertragers in einem Kraftfahrzeug große Vorteile, insbesondere im Hinblick auf einen Kraftstoffverbrauch, bietet. Zum anderen besitzt Aluminium eine vergleichsweise hohe Wärmeleitfähigkeit, wodurch eine hohe Leistung des Abgaswärmeübertragers erreicht werden kann.

Bei einer weiteren vorteilhaften Ausführungsform der erfindungsgemäßen Lösung sind die Rastkonturen derart randseitig zumindest teilweise umlaufend am Gehäuse angeordnet, dass der zugehörige Rohrboden dazwischen eingeklemmt ist. Die Rastkonturen fixieren somit den zugehörigen Rohrboden nicht nur in Axialrichtung, das heißt orthogonal zu dessen Ebene am Gehäuse, sondern auch in Ebenenrichtung, da sie selbst Begrenzungen in Ebenenrichtung für den Rohrboden darstellen. Hierdurch kann eine besonders zuverlässige Fixierung des jeweiligen Rohrbodens am Gehäuse erreicht werden.

Zweckmäßig sind das Gehäuse und die Rohrböden miteinander verlötet und/oder verschweißt. Unabhängig vom nachfolgenden Abdichtverfahren, das heißt bspw. durch Schweißen oder Löten, ermöglichen die Rastkonturen eine zuverlässige Fixierung des jeweiligen Rohrbodens am Gehäuse während des Dichtprozesses, das heißt während dem nachfolgenden Schweißen bzw. Löten, ohne dass hierfür die bislang aus dem Stand der Technik bekannten, aufwendigen und teuren sowie schwer handzuhabenden Lötrahmen/Schweißrahmen erforderlich wären.

Zweckmäßig sind die Rastkonturen einstückig mit dem Gehäuse ausgebildet. Durch eine einstückige Ausbildung der Rastkonturen mit dem Gehäuse lässt sich insbesondere die Montage der Rohrböden am Gehäuse deutlich vereinfachen, da die Rastkonturen bereits am Gehäuse angeordnet und lediglich noch durch ein Aufdrücken des Rohrbodens auf das Gehäuse mit den am Rohrboden angeordneten Gegenrastkonturen verrastet werden müssen. Eine separate Montage der Rastkonturen am Gehäuse ist somit nicht erforderlich. Hierdurch werden auch die Herstellungskosten reduziert, da die Rastkonturen, sofern diese einstückig mit dem Gehäuse ausgebildet ist, zusammen mit diesem hergestellt werden können, bspw. in einem gemeinsamen Druckgussprozess.

Die vorliegende Erfindung beruht weiter auf dem allgemeinen Gedanken, ein Verfahren zur Herstellung eines zuvor beschriebenen Abgaswärmeübertragers anzugeben, bei welchem zunächst ein metallisches Gehäuse, mehrere Flachrohre sowie zwei Rohrböden bereit gestellt werden. Die Flachrohre und die beiden Rohrböden bilden dabei den Wärmeübertragerblock des Abgaswärmeübertragers. Dabei wird zunächst ein Rohrboden an einer Seite des Gehäuses über die gehäuseseitigen Rastkonturen am Gehäuse fixiert, woraufhin die Flachrohre in die zugehörigen Durchzüge des Rohrbodens eingeschoben und im Gehäuse positioniert werden. Danach wird der zweite Rohrboden auf der gegenüberliegenden Seite des Gehäuses derart auf dieses aufgesetzt, dass die Flachrohre in die zugehörigen Durchzüge des zweiten Rohrbodens eintreten, so dass sie sowohl im ersten als auch im gegenüberliegenden zweiten Rohrboden gehalten werden. Durch ein Aufdrücken des zweiten Rohrbodens auf das Gehäuse erfolgen nun ein Verrasten der Rastkonturen und ein Fixieren des zweiten Rohrbodens am Gehäuse. Der so vorgefertigte und hinsichtlich seiner Einzelteile fixierte Abgaswärmeübertrager wird anschließend in einen Lötofen verbracht und dort verlötet oder aber in einem nachfolgenden Schweißprozess geschweißt, wodurch insbesondere die Flachrohre dicht mit den Durchzügen des jeweiligen Rohrbodens verbunden werden. Durch die über die erfindungsgemäß vorgesehenen Rastkonturen am Gehäuse verrastenden Rohrböden entfallen die bislang erforderlichen Lötrahmen/Schweißrahmen, wodurch sich der Herstellungsprozess erheblich vereinfacht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: einen erfindungsgemäßen Abgaswärmeübertrager in einer Seitenansicht,
- Fig. 2: eine Frontansicht auf den erfindungsgemäßen Abgaswärmeübertrager mit Rohrboden,
- Fig. 3: eine Schnittdarstellung durch eine Rastverbindung zwischen Gehäuse und Rohrboden des Abgaswärmeübertragers.

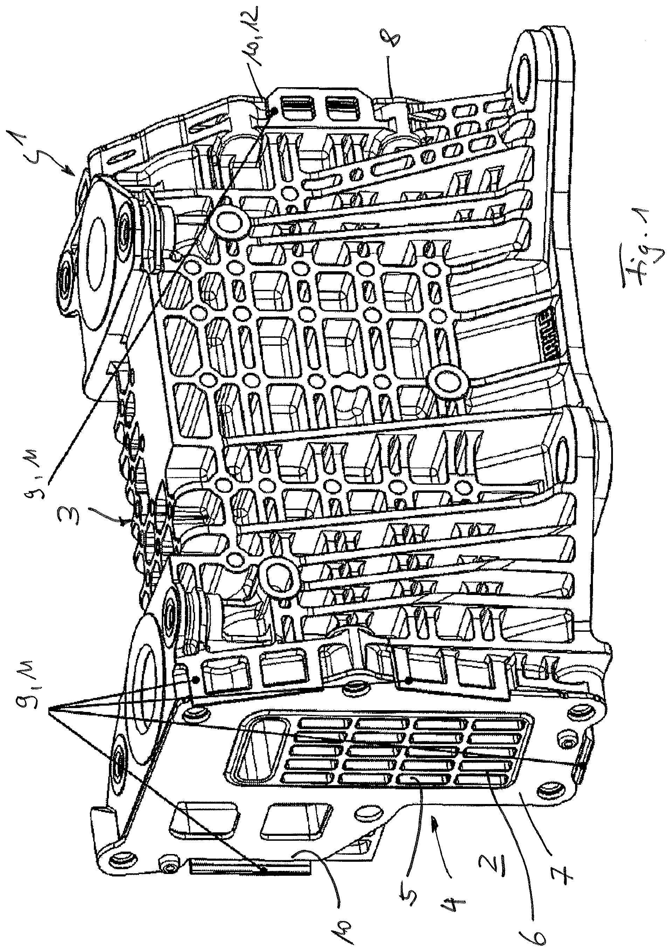

Entsprechend den Fig. 1 bis 3, weist ein erfindungsgemäßer Abgaswärmeübertrager 1, der bspw. im Bereich einer Brennkraftmaschine 2 eines Kraftfahrzeugs eingesetzt sein kann, ein Gehäuse 3 mit einem darin angeordneten Wärmeübertragerblock 4 auf. Der Wärmeübertragerblock 4 besitzt ein Rohrbündel mit mehreren Flachrohren 5, die längsendseitig in komplementär dazu ausgebildeten Durchzügen 6 in Rohrböden 7, 8 gehalten sind. In den Flachrohren 5 selbst verläuft dabei ein erster Strömungspfad für Abgas, während um die Flachrohre 5 herum und innerhalb des Gehäuses 3 in bekannter Weise ein zweiter Strömungspfad für Kühlmittel verläuft. Erfindungsgemäß sind nun zur Fixierung der Rohrböden 7 am Gehäuse 3 Rastverbindungen vorgesehen, nämlich Rastkonturen 9, die mit an einem zugehörigen Rohrboden 7, 8 angeordneten Gegenrastkonturen 10 zusammenwirken und darüber die beiden Rohrböden 7, 8 und den Wärmeübertragerblock 4 am Gehäuse 3 fixieren.

Betrachtet man die Rastkonturen 9 gemäß den Fig. 1 bis 3, so kann man erkennen, dass diese in einem besonders einfach geschalteten Fall als Rastnasen 11 ausgebildet sind, während die Gegenrastkonturen 10 als Ausnehmung oder einfach als Außenrand bzw. Rand 12 des Rohrbodens 7, 8 ausgebildet sind. Dabei ist klar, dass die Gegenrastkonturen 10 keine Rillen, Vertiefungen oder derartiges sein müssen, sondern auch durch einen einfachen planen Bereich des Rohrbodens 7, 8, beispielsweise einen planen Randbereich, gebildet sein können. Konkret bedeutet dies, dass die Gegenrastkontur 10, beispielsweise der Rand 12, oberflächenfluchtend in den ansonsten planen Rohrboden 7, 8 übergehen kann. Das Gehäuse 3 sowie die Rohrböden 7, 8 sind dabei ebenso wie die Flachrohre 5 aus Metall, bspw. aus Aluminium, ausgebildet, wobei eine derartige Ausbildung aus Aluminium zum einen den Vorteil bietet, den Abgaswärmeübertrager 1 leicht ausbilden zu können und zum anderen einen hohen Wärmeübertrag aufgrund der hohen Wärmeleitfähigkeit von Aluminium zu erreichen. Eine dichte Verbindung zwischen dem Gehäuse 3 und den Rohrböden 7, 8 bzw. den Flachrohren 5 und den Rohrböden 7, 8 kann bspw. durch ein Verlöten bzw. Verschweißen erfolgen.

Um die einzelnen Komponenten, insbesondere die beiden Rohrböden 7, 8 während des anschließenden Dichtprozesses, das heißt bspw. dem Verschweißen oder dem Verlöten mit dem Gehäuse 3, unverrückbar fixieren zu können, sind erfindungsgemäß die Rastkonturen 9 vorgesehen. Über derartige Rastkonturen 9 und an den Rohrböden 7, 8 angeordneten Gegenrastkonturen 10 können insbesondere die bislang erforderlichen Schweißrahmen bzw. Lötrahmen gänzlich entfallen, welche nicht nur schwer und damit schwierig handzuhaben waren, sondern welche auch eine erhöhte Taktzeit und damit erhöhte Fertigungs- bzw. Herstellungskosten erforderten.

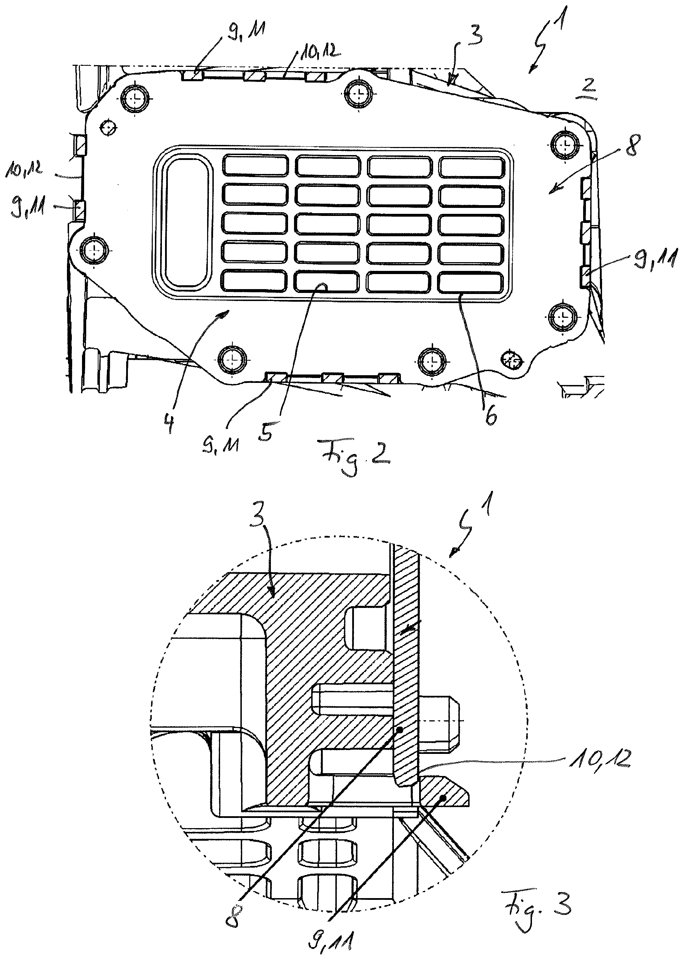

Betrachtet man die Rastkonturen 9 gemäß den Fig. 1 und 2, so kann man erkennen, dass diese derart randseitig zumindest teilweise umlaufend am Gehäuse 3 angeordnet sind, dass der zugehörige Rohrboden 7, 8 dazwischen eingeklemmt ist. Die einzelnen Rastkonturen 9, die im vorliegenden Fall als Rasthaken 11 ausgebildet sind, bieten somit ein Anschlag in Ebenenrichtung des jeweiligen Rohrbodens 7, 8, ebenso wie orthogonal dazu.

Um die Rastkonturen 9 kostengünstig herstellen zu können, können diese einstückig mit dem Gehäuse 3 ausgebildet sein, insbesondere in einem gemeinsamen Druckgussvorgang hergestellt werden. Selbstverständlich ist rein theoretisch auch eine separate Ausbildung der einzelnen Rastkonturen 9, bspw. als Klammern, denkbar. Derartige Klammern könnten nach dem Schweiß-/Lötprozess gänzlich entfernt werden, bedürfen jedoch eines erhöhten Montageaufwands.

Hergestellt wird der erfindungsgemäße Abgaswärmeübertrager 1 wie folgt: Zunächst wird das metallische Gehäuse 3, mehrere Flachrohre 5 und zwei Rohrböden 7, 8 bereitgestellt, wobei ein erster Rohrboden 7 an einer Seite des Gehäuses 3 über die gehäuseseitigen Rastkonturen 9 am Gehäuse 3 fixiert wird. Anschließend werden die Flachrohre 5 in die zugehörigen Durchzüge 6 des Rohrbodens 7 eingeschoben und im Gehäuse 3 positioniert. Darauffolgend wird der zweite Rohrboden 8 auf der gegenüberliegenden Seite derart auf das Gehäuse 3 aufgesetzt, dass die Flachrohre 5 in die zugehörigen Durchzüge 6 des zweiten Rohrbodens 8 eintreten und dadurch gehalten sind. Anschließend wird der zweite Rohrboden 8 gegen das Gehäuse 3 gedrückt, bis die Rastkonturen 9 die Gegenrastkonturen 10 am zweiten Rohrboden 8 hintergreifen und damit den Rohrboden 8 am Gehäuse 3 fixieren. In diesem nun vormontierten Zustand kann der nachfolgende Abdichtprozess, also ein Verlöten in einem Lötofen oder ein Verschweißen erfolgen.

Mittels der erfindungsgemäßen Rastkonturen 9 und der zugehörigen Gegenrastkonturen 10 kann einfache Vorfixierung der einzelnen Bauteile 7, 8 am Gehäuse 3 erfolgen, und zugleich eine Fixierung während eines nachfolgenden Löt-/Schweißprozesses erreicht werden, ohne dass hierfür bislang erforderliche, aufwendig handzuhabende und teure Lötrahmen/Schweißrahmen erforderlich wären.

## Patentansprüche

1. Abgaswärmeübertrager (1) mit einem Gehäuse (3) und einem darin angeordneten Wärmeübertragerblock (4), der ein Rohrbündel mit mehreren Flachrohren (5) aufweist, die längsendseitig in komplementär dazu ausgebildeten Durchzügen (6) in Rohrböden (7,8) gehalten sind, wobei in den Flachrohren (5) ein erster Strömungspfad für Abgas und um die Flachrohre (5) herum und innerhalb des Gehäuses (3) ein zweiter Strömungspfad für Kühlmittel verläuft,
**dadurch gekennzeichnet,**
**dass** an dem Gehäuse (3) Rastkonturen (9) vorgesehen sind, die mit an einem zugehörigen Rohrboden (7,8) angeordneten Gegenrastkonturen (10) zusammenwirken und die beiden Rohrböden (7,8) und damit den Wärmeübertragerblock (4) am Gehäuse fixieren.

2. Abgaswärmeübertrager nach Anspruch 1,
**dadurch gekennzeichnet,**
**dass** die Rastkonturen (9) als Rastnasen (11) ausgebildet sind.

3. Abgaswärmeübertrager nach Anspruch 1 oder 2,
**dadurch gekennzeichnet,**
**dass** die Gegenrastkonturen (10) als Ausnehmung oder als Rand (12) ausgebildet sind.

4. Abgaswärmeübertrager nach einem der vorhergehenden Ansprüche,
**dadurch gekennzeichnet,**
**dass** das Gehäuse (3) und die Rohrböden (7,8) aus Metall, insbesondere aus Aluminium, ausgebildet sind.

5. Abgaswärmeübertrager nach einem der vorhergehenden Ansprüche,
**dadurch gekennzeichnet,**
**dass** das Gehäuse (3) und die Rohrböden (7,8) miteinander verlötet und/oder verschweißt sind.

6. Abgaswärmeübertrager nach einem der vorhergehenden Ansprüche,
**dadurch gekennzeichnet,**
**dass** die Rastkonturen (9) derart randseitig zumindest teilweise umlaufend am Gehäuse (3) angeordnet sind, dass der zugehörige Rohrboden (7,8) dazwischen eingeklemmt ist.

7. Abgaswärmeübertrager nach einem der vorhergehenden Ansprüche,
**dadurch gekennzeichnet,**
**dass** die Rastkonturen (9) einstückig mit dem Gehäuse (3) ausgebildet sind.

8. Verfahren zur Herstellung eines Abgaswärmeübertragers (1) nach einem der Ansprüche 1 bis 7, bei dem
- ein metallisches Gehäuse (3), mehrere Flachrohre (5) und zwei Rohrböden (7,8) bereitgestellt werden,
- ein Rohrboden (7) an einer Seite des Gehäuses (3) über die gehäuseseitigen Rastkonturen (9) am Gehäuse (3) fixiert wird,
- die Flachrohre (5) in die zugehörigen Durchzüge (6) des Rohrbodens (7) eingeschoben und im Gehäuse (3) positioniert werden,
- der zweite Rohrboden (8) auf der gegenüberliegenden Seite auf derart auf das Gehäuse (3) aufgesetzt wird, dass die Flachrohre (5) in die zugehörigen Durchzüge (6) des zweiten Rohrbodens (8) eintreten,
- der zweite Rohrboden (8) auf das Gehäuse (3) gedrückt wird, bis die Rastkonturen (9) mit den Gegenrastkonturen (10) des zweiten Rohrbodens (8) verrasten und diesen am Gehäuse (3) fixieren,
- der so vorgefertigte Abgaswärmeübertrager (1) in einen Lötofen verbracht und dort gelötet wird, oder
- der so vorgefertigte Abgaswärmeübertrager (1) geschweißt wird.
